# EUROPÄISCHE PATENTANMELDUNG

(11) **EP 3 708 289 A1**
(43) Veröffentlichungstag der Anmeldung: **16.09.2020**
(21) Anmeldenummer: 19162003.8
(22) Anmeldetag: 11.03.2019
(51) Int. Cl.: B23K 26/06, G02B 26/08, G02B 27/09

(54) **STRAHLFORMUNGS- UND ABLENKOPTIK FÜR EINE LASERBEARBEITUNGSVORRICHTUNG UND VERFAHREN ZUR BEARBEITUNG EINES WERKSTÜCKS MIT HILFE EINES LASERSTRAHLS**

(71) Anmelder: FRONIUS INTERNATIONAL GmbH, 4643 Pettenbach (AT)
(72) Erfinder: Roither, Stefan, 4643 Pettenbach (AT); Binder, Manuel, 4643 Pettenbach (AT); Pichler, Stefan, 4643 Pettenbach (AT)
(74) Vertreter: Sonn & Partner Patentanwälte

(57) **Zusammenfassung**

Die Erfindung betrifft eine Strahlformungs- und Ablenkoptik (1) für eine Laserbearbeitungsvorrichtung, mit zumindest zwei in Richtung (z) des Laserstrahls (L) hintereinander angeordneten optischen Elementen (2, 3), wobei zumindest ein optisches Element (2) mit einem Antrieb zur Drehung des optischen Elements (2) um die optische Achse verbunden ist, sowie ein Verfahren zur Bearbeitung eines Werkstücks (W) mit Hilfe eines kollimierten Laserstrahls (L). Zur Erzielung verschiedener Formen des Laserstrahls (L) am Werkstück (W) sind die zumindest zwei optischen Elemente (2, 3) der Strahlformungs- und Ablenkoptik (1) durch optische Keile (5, 6) mit jeweils einem Keilwinkel (αᵢ) gebildet, und diese optischen Keile (5, 6) überdecken jeweils nur einen Teil des Laserstrahls (L).

## Beschreibung

Die Erfindung betrifft eine Strahlformungs- und Ablenkoptik für eine Laserbearbeitungsvorrichtung, mit zumindest zwei in Richtung eines kollimierten Laserstrahls hintereinander angeordneten optischen Elementen, wobei zumindest ein optisches Element mit einem Antrieb zur Drehung des optischen Elements um die optische Achse verbunden ist.

Weiters betrifft die Erfindung ein Verfahren zur Bearbeitung eines Werkstücks mit Hilfe eines kollimierten Laserstrahls, wobei der kollimierte Laserstrahl durch eine Strahlformungs- und Ablenkoptik mit zumindest zwei in Strahlrichtung des Laserstrahls hintereinander angeordneten optischen Elementen, und eine Fokussierlinse verläuft, wobei zumindest ein optisches Element der Strahlformungs- und Ablenkoptik um die optische Achse verdreht wird.

Die Erfindung bezieht sich sowohl auf Verfahren und Vorrichtungen zur Bearbeitung eines Werkstücks (insbesondere Laserschweißen oder Laserpunktschweißen und Löten) mithilfe eines Laserstrahls, als auch auf Verfahren und Vorrichtungen zur Bearbeitung eines Werkstücks mit einem oder mehreren Laserstrahlen kombiniert mit einem Lichtbogen, wie es beispielsweise bei Laser-Hybrid-Schweißverfahren zur Anwendung kommt.

Mithilfe eines Laserstrahls können beispielsweise Werkstücke verschweißt, geschnitten, Elemente durch Löten mit einem Werkstück verbunden, oder die Oberfläche von Werkstücken durch die mit dem Laser eingebrachte Wärme bearbeitet werden. Je nach Anwendung und Beschaffenheit des Werkstücks werden unterschiedliche Durchmesser und Formen des auf der Werkstückoberfläche auftreffenden Spots des Laserstrahls benötigt. Die Formung des Laserstrahls erfolgt üblicherweise durch entsprechende optische Elemente, welche nach der Lasererzeugungsvorrichtung und allfälligen Kollimationslinse zur Beeinflussung des Laserstrahls angeordnet sind. Über eine derartige Strahlformungs- und Ablenkoptik können unterschiedliche Spotformen des Laserstrahls an der Oberfläche des zu bearbeitenden Werkstücks erzeugt werden, die für verschiedene Aufgabenstellungen geeignet sind.

Es kann auch gefordert sein, dass die Verteilung der Leistungsdichte des Laserstrahls während einer laufenden Bearbeitung des Werkstücks geändert werden soll, wofür entsprechende optische Einrichtungen mit bewegbar angeordneten optischen Elementen verwendet werden.

Beispielsweise beschreibt die EP 2 780 131 B1 ein Verfahren zum Laserschweißen, wobei zur Verbesserung des Schweißprozesses optische Elemente gedreht werden und dadurch der Laserstrahl entsprechend abgelenkt wird.

Die EP 3 250 958 B1 beschreibt eine Vorrichtung und ein Verfahren zur Bearbeitung eines Werkstücks mithilfe eines Laserstrahls, wobei zur Formung und Ablenkung des Laserstrahls zumindest ein plattenförmiges optisches Element angeordnet ist, dessen eine Fläche mit einem kreisförmigen Muster mit sektorförmigen Facetten mit unterschiedlichen Neigungen versehen ist, wodurch der Laserfokus in der Brennebene in eine Vielzahl von Punkten zerlegt wird, die ringförmig um die optische Achse des Strahlengangs angeordnet sind.

Die US 9,285,593 B1 beschreibt ein Verfahren zur Formung eines Laserstrahls zur Erzielung runder oder quadratischer Spotformen mit spezieller Intensitätsverteilungen. Dazu wird ein vollflächiges optisches Element mit relativ anspruchsvoller Oberflächenkontur in den Strahlengang des Laserstrahls eingesetzt.

Nachteilig bei bekannten Verfahren und Vorrichtungen der gegenständlichen Art ist die mangelnde Flexibilität der Veränderung der Spotform während der Bearbeitung des Werkstücks und bzw. oder der komplexe und aufwändige Aufbau der Strahlformungs- und Ablenkoptik, der eine kompakte Bauweise der Laserbearbeitungsvorrichtung nicht möglich macht.

Die Aufgabe der vorliegenden Erfindung besteht daher in der Schaffung einer oben genannten Strahlformungs- und Ablenkoptik einer Laserbearbeitungsvorrichtung sowie eines oben genannten Verfahrens zur Bearbeitung eines Werkstücks mit Hilfe eines Laserstrahls, durch welche eine einfache und adaptive Strahlform für verschiedene Anwendungen erzielbar ist. Die Veränderung der Strahlform soll auch während des Laserbearbeitungsprozesses möglichst rasch durchführbar sein. Die Strahlformungs- und Ablenkoptik soll weiters möglichst platzsparend aufgebaut sein, sodass die Strahlformung mit geringer Störkontur ermöglicht wird. Nachteile bekannter Vorrichtungen und Verfahren sollen verhindert oder zumindest reduziert werden.

Gelöst wird die erfindungsgemäße Aufgabe durch eine oben genannte Strahlformungs- und Ablenkoptik einer Laserbearbeitungsvorrichtung, bei der die zumindest zwei optischen Elemente durch optische Keile mit jeweils einem Keilwinkel gebildet sind, wobei diese optischen Keile jeweils nur einen Teil des Laserstrahls überdecken, wobei ein optischer Keil gegenüber dem zumindest einen weiteren optischen Keil verdrehbar ist. Die vorliegende Erfindung sieht einen besonders einfachen Aufbau durch zumindest zwei optische Keile vor, welche zueinander verdreht werden können. Dadurch kann in besonders einfacher und rascher Weise eine Aufteilung des Laserstrahls in mehrere Spots und eine Veränderung der Spotform an der Werkstückoberfläche erzielt werden. Aufgrund des einfachen Aufbaus ist eine besonders platzsparende Realisierung möglich, welche eine geringe Störkontur aufweist und einen schlanken Aufbau des Bearbeitungskopfs ermöglicht. Auch während des Bearbeitungsprozesses kann durch Verdrehung der zumindest zwei optischen Keile zueinander und bzw. oder Verdrehung sämtlicher optischer Keile gemeinsam eine Veränderung der Strahlformung und Strahlablenkung vorgenommen werden und eine optimale Anpassung des Laserstrahls an die gewünschte Bearbeitung durchgeführt werden. Beispielsweise kann während eines Schweißverfahrens ohne Unterbrechung des Prozesses eine Veränderung der Spotform zur Veränderung der Spaltüberbrückbarkeit vorgenommen werden.

Wenn die Keilwinkel aller optischen Keile betragsmäßig gleich sind, kann die Strahlformungs- und Ablenkoptik bei Bedarf in eine Neutralstellung positioniert werden. Bei entsprechender Lage der optischen Keile zueinander in dieser Neutralstellung kann eine Aufhebung der Ablenkung des Laserstahls erzielt werden und der Laserstrahl trifft somit unverändert auf dem Werkstück auf.

Vorteilhafterweise überdecken die optischen Keile jeweils zwischen 25% und 50% des Laserstrahls. Je nach Anzahl an optischen Keilen und gewünschter Anzahl an Spots an der Oberfläche des zu bearbeitenden Werkstücks eignen sich derartige Überdeckungswerte.

Die optischen Keile sind bevorzugt kreissektorförmig oder kreissegmentförmig ausgebildet. Durch eine kreissektorförmige oder kreissegmentförmige Ausbildung der optischen Keile in ihrer Draufsicht wird eine besonders platzsparende Anordnung der Strahlformungs- und Ablenkoptik erzielt, da bei Drehung der optischen Keile zueinander oder Drehung sämtlicher optischer Keile gemeinsam die Außenkontur nicht verändert wird. Somit resultiert eine platzsparende Bauweise mit geringer Störkontur.

Wenn die optischen Keile jeweils in einer Hohlwelle angeordnet sind, kann eine relativ einfache Drehung der optischen Keile durch Drehung der jeweiligen Hohlwellen erzielt werden. Auch können die optischen Keile innerhalb der Hohlwelle vor Verschmutzung geschützt werden. Um bei hohen Rotationsgeschwindigkeiten Laufruhe zu erreichen, können die Hohlwellen gewuchtet werden.

Die Hohlwellen weisen vorzugsweise einen Durchmesser zwischen 25 mm und 90 mm auf. Dadurch kann eine besonders platzsparende und schlanke Bauweise der Strahlformungs- und Ablenkoptik und somit der gesamten Laserbearbeitungsvorrichtung bzw. des Bearbeitungskopfes erzielt werden, welche eine bessere Beweglichkeit desselben zulässt. Insbesondere bei Roboteranwendungen ist dies von großer Bedeutung. Um die Hohlwellen und daran angrenzende Komponenten der Strahlformungs- und Ablenkoptik vor thermischer Überhitzung beispielsweise aufgrund Absorption gestreuter Laserstrahlung und bzw. oder rückreflektierter Prozeßstrahlung zu schützen, können die Innenflächen der Hohlwellen gegebenenfalls mit einer reflektierenden Beschichtung, insbesondere einer Goldbeschichtung, versehen werden.

Der Keilwinkel der optischen Keile beträgt mindestens 1 Millirad (0,057°), vorzugsweise zwischen 3 Millirad (0,17°) und 15 Millirad (0,859°). Derartige Keilwinkel sind erfahrungsgemäß für die Erzielung entsprechender Spotgrößen und Spotformen an der Oberfläche des zu bearbeitenden Werkstücks zielführend.

Gemäß einem weiteren Merkmal der Erfindung ist mindestens ein Istwertgeber zur Bestimmung der Position der optischen Keile bzw. Hohlwellen vorgesehen. Durch derartige Drehgeber bzw. Drehwinkelgeber kann eine optimale Erfassung und Steuerung der Position der optischen Keile zueinander bzw. sämtlicher optischer Keile in Bezug auf das Werkstück erfolgen. Istwertgeber sind in verschiedenen Ausführungsformen und in geringer Baugröße erhältlich, wodurch die Abmessungen der Strahlformungs- und Ablenkoptik nicht wesentlich vergrößert werden. Beispielsweise kann der Istwertgeber durch einen Encoder (optisch, induktiv) oder Resolver gebildet sein.

Die optischen Keile können aus Quarzglas, Borsilikat-Kronglas, Zinkselenid oder Zinksulfid gebildet sein. Diese Materialien eignen sich für die Ablenkung und Formung von Laserstrahlen besonders und sind darüber hinaus auch relativ temperaturbeständig.

Alle optischen Keile bzw. die Hohlwellen können mit jeweils einem Antrieb zur unabhängigen Drehung jedes optischen Keils um die optische Achse verbunden sein. Dadurch wird eine hohe Flexibilität bei der Erzielung verschiedener Strahlformen erreicht.

Weiters kann ein Antrieb zur Drehung aller optischer Keile bzw. Hohlwellen gemeinsam vorgesehen sein. Neben der Bildung unterschiedlicher Spotformen kann durch die Drehung der Gesamtanordnung um die optische Achse eine bessere Überdeckung der zu bearbeitenden Oberfläche des Werkstücks erzielt werden, indem die Spots um den Nullpunkt bzw. die optische Achse rotieren. Dadurch entsteht eine sogenannte dynamische Strahlformung.

Der zumindest eine Antrieb ist mit einer Motorsteuerung verbunden, sodass die gewünschten Strahlformen rasch und einfach einstellbar sind. In Abhängigkeit der verwendeten Antriebsmotoren kann die Motorsteuerung beispielsweise durch einen Mikrocontroller oder Mikroprozessor gebildet sein.

Gelöst wird die erfindungsgemäße Aufgabe auch durch ein oben genanntes Verfahren zur Bearbeitung eines Werkstücks mit Hilfe eines kollimierten Laserstrahls, wobei der Laserstrahl in der Strahlformungs- und Ablenkoptik durch zumindest zwei optische Keile mit jeweils einem Keilwinkel verläuft, wobei der Laserstrahl von den optischen Keilen nur teilweise überdeckt wird, und wobei ein optischer Keil gegenüber dem zumindest einen weiteren optischen Keil verdreht wird. Das erfindungsgemäße Verfahren ermöglicht eine rasche und adaptive Strahlfomung in einfacher Bauweise. Bezüglich der weiteren Vorteile wird auf die obige Beschreibung der Strahlformungs- und Ablenkoptik verwiesen.

Wenn der Laserstrahl durch zumindest zwei optische Keile mit betragsmäßig gleichem Keilwinkel verläuft, kann bei entsprechender Lage der optischen Keile eine Aufhebung der Strahlformung und Ablenkung erfolgen wodurch der Laserstrahl unverändert auf die Oberfläche des zu bearbeitenden Werkstücks auftrifft.

Die optischen Keile werden mit einer Umdrehungsgeschwindigkeit zwischen 100 und 10000 U/min, vorzugsweise zwischen 500 und 7000 U/min gedreht. Derartige Geschwindigkeitswerte ermöglichen eine rasche Veränderung der zu erzielenden Spotformen, welche für die meisten Bearbeitungsvorgänge ausreichen.

Die Position und Drehung der zumindest zwei optischen Keile kann mit Hilfe zumindest eines Istwertgebers erfasst werden. Wie bereits oben erwähnt, kann durch die Erfassung der Position und Drehung sämtlicher optischer Keile mithilfe entsprechender Drehgeber eine optimale Steuerung der Strahlformungs- und Ablenkoptik erzielt werden.

Wenn die zumindest zwei optischen Keile mit gleicher Geschwindigkeit in gleiche Richtung gedreht werden, kann eine Drehung der durch die Zuordnung der zumindest zwei optischen Keile zueinander gebildeten Spotform um den Nullpunkt bzw. die optische Achse erzielt werden. Dies entspricht einer dynamischen Strahlformung, durch welche der vom Laserstrahl abgedeckte Bereich an der Oberfläche des zu bearbeitenden Werkstücks vergrößert werden kann.

Wenn die zumindest zwei optischen Keile mit gleicher Geschwindigkeit in entgegengesetzte Richtung gedreht werden, wird eine periodische Veränderung der Spotform während der Bearbeitung des Werkstücks erzielt. Der dabei entstehende Pendeleffekt, bei dem die Leistungsdichte des Laserstrahls in der Werkstückebene vor und zurück bewegt wird, kann für bestimmte Anwendungen vorteilhaft sein.

Weiters kann zumindest ein optischer Keil um einen vorgegebenen Winkelbereich in einer Pendelbewegung hin- und hergedreht werden. Dadurch kann jede Spotform um den vorgegebenen Winkelbereich hin und her geschwenkt werden wodurch eine größere Überdeckung des zu bearbeitenden Bereichs auf dem Werkstück erzielt werden kann. Der vorgegebene Winkelbereich kann beispielsweise zwischen 45° und -45° liegen.

Der Laserstrahl kann gemäß einem weiteren Merkmal der Erfindung auch in Abhängigkeit der Lage und Bewegung des Bearbeitungskopfes der Laserbearbeitungsvorrichtung in Bezug auf das zu bearbeitende Werkstück geformt werden, um für jede Lage und Bewegung ein optimales Bearbeitungsergebnis erzielen zu können. Beispielsweise kann eine unterschiedliche Spotform des Laserstrahls bei senkrechter Bearbeitung, waagrechter Bearbeitung oder Überkopfbearbeitung des Werkstücks zweckmäßig sein. Weiters kann die Strahlformung auch von der Geschwindigkeit des Bearbeitungskopfes abhängig gestaltet werden. Die Lage und Bewegung des Bearbeitungskopfes kann durch entsprechende Sensoren erfasst oder auch aus Bewegungsdaten eines allfälligen Roboters bei automatisierten Laserbearbeitungsvorrichtungen abgeleitet werden und der Strahlformungs- und Ablenkoptik bzw. dessen Motorsteuerung(en) für die optischen Keile zugeführt werden.

Bei den erwähnten Laser-Hybrid-Schweißgeräten mit einer Kombination zumindest eines Laserstrahls mit zumindest einem Lichtbogen kann die Veränderung der Spotform des zumindest einen Laserstrahls in Abhängigkeit von Schweißparametern (Schweißstrom, Schweißspannung, Vorschubgeschwindigkeit eines Schweißdrahts, Polarität des Schweißstroms etc.) oder von Phasen des Schweißprozesses (Kurzschlussphase, Pulsphase, Lichtbogenphasen, etc.) für manche Anwendungen Vorteile bringen.

Bei Laser-Hybrid-Schweißgeräten kann auch die Lage des Laserstrahls in Bezug auf den Lichtbogen ausschlaggebend für die Formung des Laserstrahls sein. Beispielsweise kann für einen gegenüber dem Lichtbogen vorlaufenden Laserstrahl eine andere Spotform des Laserstrahls vorteilhaft sein als bei einem dem Lichtbogen nachlaufenden Laserstrahl.

Die vorliegende Erfindung wird anhand der beigefügten Zeichnungen näher erläutert. Darin zeigen:
- Fig. 1: ein Blockschaltbild einer Vorrichtung zur Bearbeitung eines Werkstücks mit Hilfe eines Laserstrahls nach dem Stand der Technik;
- Fig. 2: eine Ausführungsvariante einer erfindungsgemäßen Strahlformungs- und Ablenkoptik in geschnittener Seitenansicht;
- Fig. 3: eine Draufsicht auf die Strahlformungs- und Ablenkoptik gemäß Fig. 2;
- Fig. 4A bis 4D: verschiedene Positionen zweier halbkreisförmiger optischer Keile einer Strahlformungs- und Ablenkoptik gegeneinander zur Erzielung verschiedener Formen von Laserstrahlen am Werkstück;
- Fig. 5: eine Ausführungsform einer Strahlformungs- und Ablenkoptik mit Antrieben zur Bewegung der optischen Keile in teilweise geschnittener Form;
- Fig. 6: verschiedene Strahlformen bei verschiedenen Winkellagen zwischen zwei optischen Keilen zueinander (statische Spots);
- Fig. 7A: verschiedene Spotformen bei zusätzlicher Rotation;
- Fig. 7B: die zugehörigen Leistungsdichten der Spotformen gemäß Fig. 7A; und
- Fig. 8: die Spotform bei einer gemeinsamen Pendelbewegung deroptischen Keile.

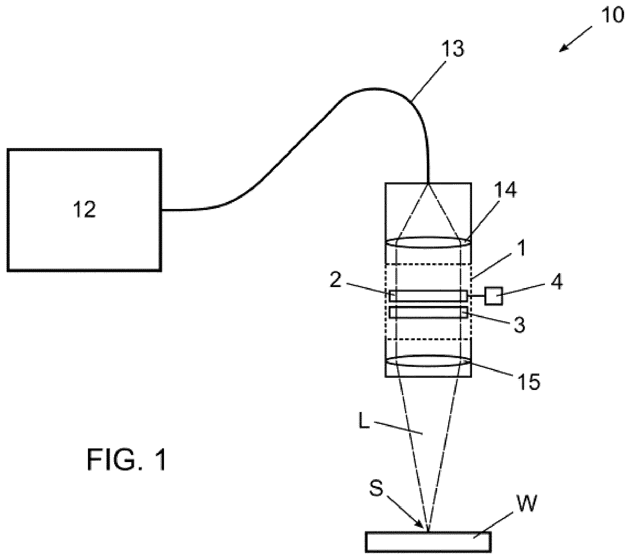

Fig. 1 zeigt ein Blockschaltbild einer Vorrichtung 10 zur Bearbeitung eines Werkstücks W mit Hilfe eines Laserstrahls L nach dem Stand der Technik. Die Bearbeitungsvorrichtung 10 beinhaltet eine Lasererzeugungsvorrichtung 12 und eine Lichtleitfaser 13 über welche der Laserstrahl L zum entsprechenden Bearbeitungskopf transportiert wird. Der Laserstrahl L wird beispielsweise mithilfe einer Kollimationslinse 14 kollimiert und über eine Fokussierlinse 15 an der Oberfläche des zu bearbeitenden Werkstücks W fokussiert. Über eine zwischen der Kollimationslinse 14 und Fokussierlinse 15 angeordnete Strahlformungs- und Ablenkoptik 1 kann der Laserstrahl L so beeinflusst werden, dass die Spotform S an der Oberfläche des zu bearbeitenden Werkstücks W verändert werden kann. Dazu sind in der Strahlformungs- und Ablenkoptik 1 zumindest zwei optische Elemente 2, 3 im Strahlengang des Laserstrahls L angeordnet, welche den kollimierten Laserstrahl L entsprechend beeinflussen, sodass sich die Spotform S an der Oberfläche des zu bearbeitenden Werkstück W ändert. Durch eine Veränderung der Orientierung eines optischen Elements 2 in Bezug auf das andere optische Element 3 kann auch während der Bearbeitung des Werkstücks W eine Veränderung der Spotform S des Laserstrahls L erfolgen. Dazu ist ein optisches Element 2 mit einem entsprechenden Antrieb 4 verbunden. Bei einem Laser-Hybrid-Schweißgerät wird der Laserstrahl L mit zumindest einem Lichtbogen kombiniert (nicht dargestellt).

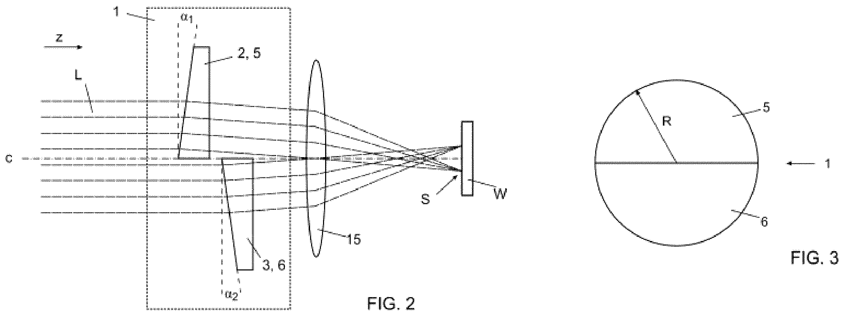

Fig. 2 zeigt eine Ausführungsvariante einer erfindungsgemäßen Strahlformungs- und Ablenkoptik 1 in geschnittener Seitenansicht. Erfindungsgemäß sind die zumindest zwei optischen Elemente 2, 3 der Strahlformungs- und Ablenkoptik 1 durch optische Keile 5, 6 mit jeweils einem Keilwinkel α₁, α₂ gebildet. Derartige optische Keile 5, 6 bzw. Prismen lenken den kollimierten Laserstrahl L entsprechend dem Keilwinkel α₁, α₂ ab, wodurch sich die Auftreffstelle des Laserstrahls L an der Oberfläche des zu bearbeitenden Werkstücks W und somit die Spotform S ändert. Dadurch dass die zwei optischen Keile 5, 6 jeweils nur einen Teil des Laserstrahls L überdecken, kann die Anzahl der Auftreffpunkte des Laserstrahls an der Oberfläche des Werkstücks W verändert werden. Im dargestellten Ausführungsbeispiel überdecken die beiden optischen Keile 5, 6 jeweils im Wesentlichen 50% des Laserstrahls L. In Richtung z des Laserstrahls L gesehen hinter der Strahlformungs- und Ablenkoptik 1 ist eine Fokussierlinse 15 angeordnet, über die der abgelenkte Laserstrahl L entsprechend auf der Oberfläche des zu bearbeitenden Werkstücks W fokussiert wird. Durch Drehung zumindest eines optischen Keils 5, 6 um die optische Achse c kann eine Veränderung der Spotform S an der Oberfläche des Werkstücks W erzielt werden. Durch eine Drehung der gesamten Strahlformungs- und Ablenkoptik 1 um die optische Achse c kann eine dynamische Strahlformung bzw. Drehung der Spotform S um die optische Achse c erzielt werden. Der zweite optische Keil 6 mit dem Keilwinkel α₂ kann auch spiegelbildlich zu dem optischen Keil 6 gemäß Figur 2 angeordnet werden, wodurch andere Strahl- und Spotformen S erzeugt werden können. Wenn beispielsweise die Keilwinkel α₁, α₂ der optischen Keile 5, 6 betragsmäßig gleich sind, kann bei entsprechender entgegengesetzter Orientierung der beiden optischen Keile 5, 6 zueinander eine Aufhebung der Ablenkung des kollimierten Laserstrahls L durch die optischen Keile 5, 6 erfolgen wodurch der kollimierte Laserstrahl L durch die Strahlformungs- und Ablenkoptik 1 nicht wesentlich beeinflusst wird und eine Spotform S an der Oberfläche des Werkstücks W resultiert, welche einer Spotform S ohne Strahlformungs- und Ablenkoptik 1 entspricht. Das heißt, dass bei entsprechender entgegengesetzt orientierter Stellung der optischen Keile 5, 6 mit betragsmäßig gleichen Keilwinkeln α₁ = α₂ die Strahlformung und Ablenkung des Laserstrahls L in eine Neutralstellung geschaltet werden kann.

Fig. 3 zeigt eine Draufsicht auf die Strahlformungs- und Ablenkoptik 1 gemäß Fig. 2. Vorzugsweise sind die optischen Keile 5, 6 in der Draufsicht kreissektorförmig oder kreissegmentförmig ausgebildet und weisen einen Radius R im Bereich von 10 mm bis 40 mm auf, wodurch die Größe der Strahlformungs- und Ablenkoptik 1 gering gehalten und die Baugröße des Bearbeitungskopfes der Laserbearbeitungsvorrichtung 10 reduziert werden kann.

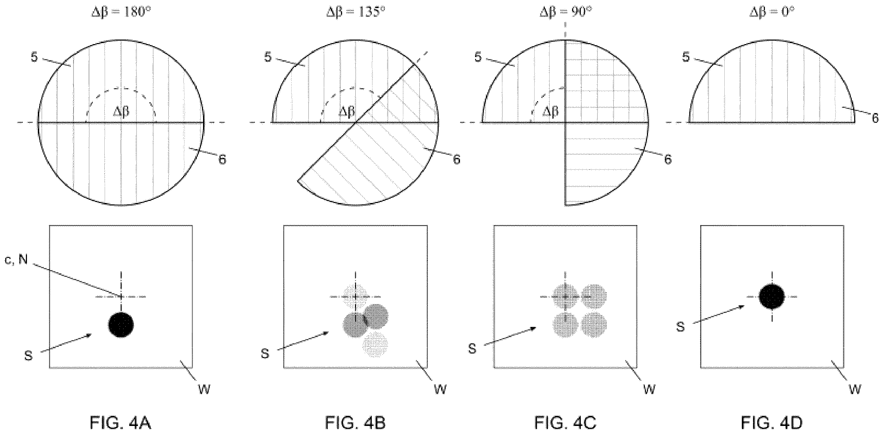

In den Fig. 4A bis 4D sind verschiedene Positionen zweier halbkreisförmiger optischer Keile 5, 6 einer Strahlformungs- und Ablenkoptik 1 gegeneinander zur Erzielung verschiedener Formen von Laserstrahlen L am Werkstück W dargestellt. Im dargestellten Ausführungsbeispiel weisen die beiden optischen Keile 5, 6 entgegengesetzt gleiche Winkel α₁ = -α₂ auf. Bei einer Position der beiden optischen Keile 5, 6 zueinander mit einem Winkel Δβ=180° gemäß Figur 4A wird der Laserstrahl L vom optischen Keil 5 und optischen Keil 6 in gleicher Richtung abgelenkt, wodurch eine Spotform S am Werkstück W resultiert, welche vom Nullpunkt N bzw. Zentrum der optischen Achse c entsprechend abgelenkt ist.

Bei der in Figur 4B dargestellten Lage der optischen Keile 5, 6 zueinander mit einem Winkel Δβ=135° zwischen zwei optischen Keilen 5, 6 resultiert eine Spotform S an der Oberfläche des Werkstücks W, welche vier Auftreffpunkte des Laserstrahls L an verschiedenen Stellen um die optische Achse c aufweist entsprechend den Keilwinkeln α₁ und α₂ der optischen Keile 5, 6, deren ablenkende Wirkungen sich im Überlappbereich entsprechend addieren. Bei der Anordnung gemäß Figur 4C mit einem Winkel Δβ=90° zwischen den optischen Keilen 5, 6 resultiert die entsprechend dargestellte Spotform S auf dem Werkstück W. Bei der Position der optischen Keile 5, 6 zueinander gemäß Figur 4D (Winkel Δβ=0°) kompensieren sich die Wirkungen der optischen Keile 5, 6 mit Keilwinkel α₁ = -α₂, wodurch eine Spotform S am Werkstück W resultiert, welche im Zentrum der optischen Achse c bzw. dem Nullpunkt N angeordnet ist und einer Spotform S des Laserstrahls L ohne Strahlformungs- und Ablenkoptik 1 entspricht.

Somit kann durch Veränderung der Orientierung der beiden optischen Keile 5, 6 zueinander bzw. der Veränderung des Winkels Δβ zwischen den optischen Keilen 5, 6 eine Veränderung der Spotform S an der Oberfläche des Werkstücks W erzielt werden. Durch Erhöhung der Anzahl der optischen Keile beispielsweise auf drei oder mehr optische Keile kann die Anzahl der Spots in der Spotform S erhöht und die Variation der erzielbaren Spotformen S noch weiter verändert werden.

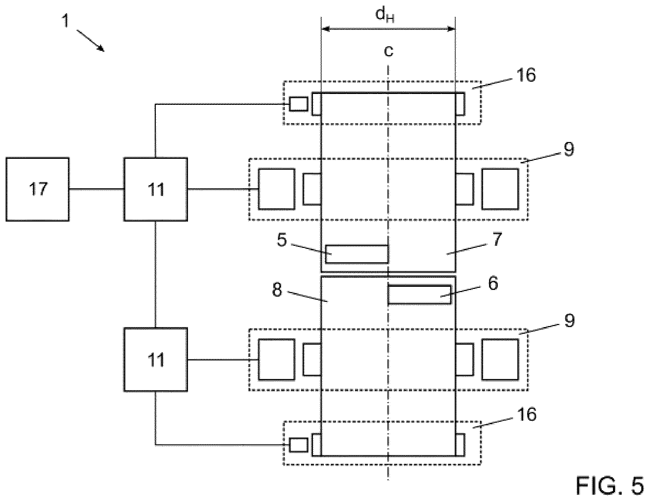

Fig. 5 zeigt eine Ausführungsform einer Strahlformungs- und Ablenkoptik 1 mit Antrieben zur Bewegung der optischen Keile 5, 6 in teilweise geschnittener Form. Die optischen Keile 5, 6 der Strahlformungs- und Ablenkoptik 1 sind jeweils in Hohlwellen 7, 8 angeordnet, die über entsprechende Antriebe 9 um die optische Achse c gedreht werden können. Die Antriebe 9 können beispielsweise durch Hohlwellenmotoren oder Torque-Motoren gebildet sein. Zusätzlich zu den Antrieben 9 zur Drehung der optischen Keile 5, 6 oder Hohlwellen 7, 8 kann ein weiterer Antrieb 9 zur Drehung der gesamten Strahlformungs- und Ablenkoptik 1 um die optische Achse c vorgesehen sein (nicht dargestellt). Über entsprechende Istwertgeber 16 können die Positionen der optischen Keile 5, 6 bzw. Hohlwellen 7, 8 erfasst werden. Entsprechende Motorsteuerungen 11 steuern die entsprechenden Antriebe 9 entsprechend den Einstellungen einer Bedieneinheit 17 oder aufgrund anderer Vorgaben, wie zum Beispiel aufgrund der Lage und Bewegung des Bearbeitungskopfes der Laserbearbeitungsvorrichtung 10 in Bezug auf das Werkstück W oder aufgrund von Parametern bei Laser-Hybrid-Anwendungen, wie zum Beispiel aufgrund von Schweißparametern (Schweißstrom, Schweißspannung, Vorschubgeschwindigkeit eines Schweißdrahts, Polarität des Schweißstroms, Prozessphasen, etc.). Die Strahlformungs- und Ablenkoptik 1 der gegenständlichen Art zeichnet sich durch eine relativ geringe Baugröße und kompakte Ausführungsform aus. Beispielsweise werden Durchmesser d_{H} der Hohlwellen 7, 8 im Bereich zwischen 25 mm und 90 mm erzielt, wodurch eine geringe Störkontur resultiert. Gegebenenfalls können im Gehäuse der Strahlformungs- und Ablenkoptik 1 Kühlkanäle zur Führung eines Kühlfluids angeordnet sein (nicht dargestellt).

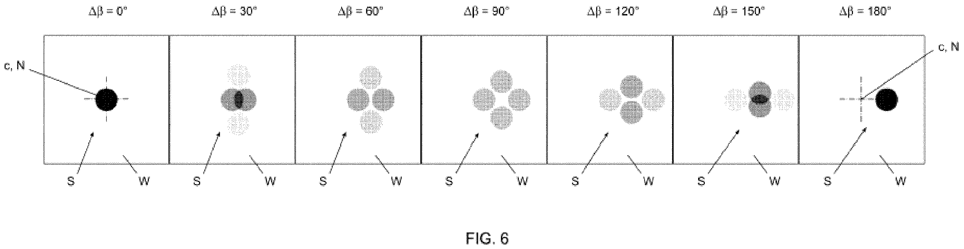

In Fig. 6 sind verschiedene Spotformen S bei verschiedenen Winkeln Δβ zwischen den optischen Keilen 5, 6 zueinander wiedergegeben. Hier sind am Beispiel zweier optischer Keile 5, 6 mit entgegengesetzt gleichen Keilwinkeln α₁ = -α₂ verschiedene Spotformen S dargestellt, wobei die Winkellage Δβ der beiden optischen Keile 5, 6 zueinander in 30°-Schritten variiert wird. Die resultierenden Spotformen S auf der Oberfläche des zu bearbeitenden Werkstücks W sind darunter dargestellt. Durch verschiedene Spotformen S kann der Wärmeeintrag bzw. das Schmelzbad sowie die Abkühlrate für verschiedene Bearbeitungsaufgaben optimal angepasst werden. Beispielsweise kann durch eine breitere Spotform S (sechstes Bild von links mit einem Winkel Δβ=150°) eine höhere Spaltüberbrückbarkeit erzielt werden. Bei der Winkellage Δβ=180° resultiert eine allenfalls um den Nullpunkt N bzw. die optische Achse c versetzte, aber unveränderte Spotform S.

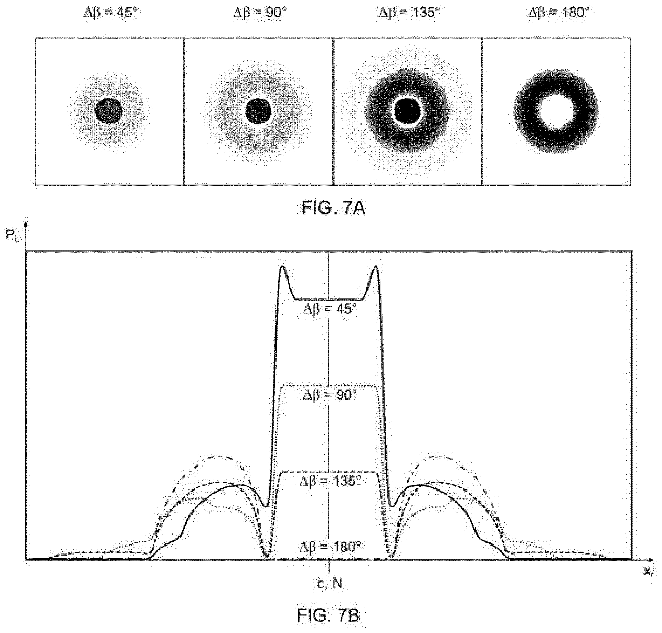

Fig. 7A zeigt verschiedene Spotformen S bei zusätzlicher Rotation der optischen Keile 5, 6 mit gleicher Geschwindigkeit in gleicher Richtung um den Nullpunkt N bzw. die optische Achse c. Der Winkel Δβ zwischen den optischen Keilen 5, 6 bleibt dabei erhalten. Dadurch können Spotformen S erzielt werden, welche unter Umständen ringförmig (Bild ganz rechts gemäß Figur 7A mit einem Winkel Δβ=180°) sind. Ebenso können Rotationsbewegungen mit kontinuierlich veränderbarer Winkellage Δβ realisiert werden.

In Figur 7B wird die Leistungsdichte P_{L} des Laserstrahls L in Abhängigkeit der radialen Position xᵣ bei den unterschiedlichen Winkellagen Δβ gemäß Figur 7A dargestellt. Durch die entsprechende Rotation der Spotformen S können unterschiedliche Energieeinträge an der Oberfläche des zu bearbeitenden Werkstück W erzielt werden. Bei verschiedenen Lagen oder Bewegungen des Laserstrahls L in Bezug auf das Werkstück W können bestimmte Spotformen S vorteilhaft sein, weshalb diese auch in Abhängigkeit der Lage und Bewegung ausgewählt werden können. Bei kombinierten Laser-Hybrid-Anwendungen kann die Spotform S des Laserstrahls auch in Abhängigkeit von Parametern des Lichtbogens oder der Prozessphasen ausgewählt werden.

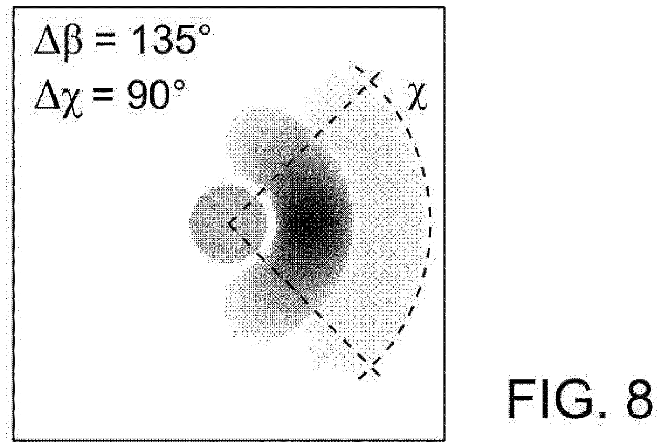

Schließlich zeigt Fig. 8 die Spotform S bei einer gemeinsamen Pendelbewegung der optischen Keile 5, 6 um einen vorgegebenen Winkelbereich. Im dargestellten Ausführungsbeispiel wird eine konstante Winkellage der optischen Keile 5, 6 zueinander von Δβ=135° angenommen, wobei die optischen Keile 5, 6 gemeinsam um den vorgegebenen Winkelbereich Δχ=90° hin und her bewegt werden. Durch eine solche Pendelbewegung kann der vorgegebene Winkelbereich Δχ um die optische Achse c überstrichen werden und eine entsprechende Wärmeverteilung an der Oberfläche bzw. im Werkstück W erzielt werden. Ebenso können Pendelbewegungen mit kontinuierlich veränderbarer Winkellage Δβ realisiert werden.

Die vorliegende Erfindung zeichnet sich durch eine einfache und adaptive Formung des Laserstrahls L mit geringer Störkontur aus.

## Patentansprüche

1. Strahlformungs- und Ablenkoptik (1) für eine Laserbearbeitungsvorrichtung (10), mit zumindest zwei in Richtung (z) eines kollimierten Laserstrahls (L) hintereinander angeordneten optischen Elementen (2, 3), wobei zumindest ein optisches Element (2) mit einem Antrieb (4) zur Drehung des optischen Elements (2) um die optische Achse (c) verbunden ist, **dadurch gekennzeichnet, dass** die zumindest zwei optischen Elemente (2, 3) durch optische Keile (5, 6) mit jeweils einem Keilwinkel (αᵢ) gebildet sind, und dass diese optischen Keile (5, 6) jeweils nur einen Teil des Laserstrahls (L) überdecken, wobei ein optischer Keil (5) gegenüber dem zumindest einen weiteren optischen Keil (6) verdrehbar ist.

2. Strahlformungs- und Ablenkoptik (1) nach Anspruch 1, **dadurch gekennzeichnet, dass** alle optischen Keile (5, 6) betragsmäßig gleiche Keilwinkel (|αᵢ|) aufweisen.

3. Strahlformungs- und Ablenkoptik (1) nach Anspruch 1 oder 2, **dadurch gekennzeichnet, dass** die optischen Keile (5, 6) jeweils zwischen 25% und 50% des Laserstrahls (L) überdecken.

4. Strahlformungs- und Ablenkoptik (1) nach einem der Ansprüche 1 bis 3, **dadurch gekennzeichnet, dass** die optischen Keile (5, 6) kreissektorförmig oder kreissegmentförmig ausgebildet sind.

5. Strahlformungs- und Ablenkoptik (1) nach einem der Ansprüche 1 bis 4, **dadurch gekennzeichnet, dass** die optischen Keile (5, 6) jeweils in einer Hohlwelle (7, 8) angeordnet sind.

6. Strahlformungs- und Ablenkoptik (1) nach einem der Ansprüche 1 bis 5, **dadurch gekennzeichnet, dass** der Keilwinkel (αᵢ) der optischen Keile (5, 6) mindestens 1 Millirad, vorzugsweise zwischen 3 Millirad und 15 Millirad beträgt.

7. Strahlformungs- und Ablenkoptik (1) nach einem der Ansprüche 1 bis 6, **dadurch gekennzeichnet, dass** mindestens ein Istwertgeber (16) zur Bestimmung der Position der optischen Keile (5, 6) bzw. Hohlwellen (7, 8) vorgesehen ist.

8. Strahlformungs- und Ablenkoptik (1) nach einem der Ansprüche 1 bis 7, **dadurch gekennzeichnet, dass** die optischen Keile (5, 6) aus Quarzglas, Borsilikat-Kronglas, Zinkselenid oder Zinksulfid gebildet sind.

9. Strahlformungs- und Ablenkoptik (1) nach einem der Ansprüche 1 bis 8, **dadurch gekennzeichnet, dass** alle optischen Keile (5, 6) bzw. die Hohlwellen (7, 8) mit jeweils einem Antrieb (4) zur unabhängigen Drehung jedes optischen Keils (5, 6) um die optische Achse (c) verbunden sind.

10. Strahlformungs- und Ablenkoptik (1) nach einem der Ansprüche 1 bis 9, **dadurch gekennzeichnet, dass** ein Antrieb (9) zur Drehung aller optischer Keile (5, 6) bzw. Hohlwellen (7, 8) gemeinsam vorgesehen ist.

11. Strahlformungs- und Ablenkoptik (1) nach einem der Ansprüche 1 bis 10, **dadurch gekennzeichnet, dass** der zumindest eine Antrieb (4, 9) mit einer Motorsteuerung (11) verbunden ist.

12. Verfahren zur Bearbeitung eines Werkstücks (W) mit Hilfe eines kollimierten Laserstrahls (L), wobei der kollimierte Laserstrahl (L) durch eine Strahlformungs- und Ablenkoptik (1) mit zumindest zwei in Strahlrichtung (z) des Laserstrahls (L) hintereinander angeordneten optischen Elementen (2, 3), und eine Fokussierlinse (15) verläuft, wobei zumindest ein optisches Element (2) der Strahlformungs- und Ablenkoptik (1) um die optische Achse (c) verdreht wird, **dadurch gekennzeichnet, dass** der Laserstrahl (L) in der Strahlformungs- und Ablenkoptik (1) durch zumindest zwei optische Keile (5, 6) mit jeweils einem Keilwinkel (αᵢ) verläuft, wobei der Laserstrahl (L) von den optischen Keilen (5, 6) nur teilweise überdeckt wird, und wobei ein optischer Keil (5) gegenüber dem zumindest einen weiteren optischen Keil (6) verdreht wird.

13. Verfahren nach Anspruch 12, **dadurch gekennzeichnet, dass** der Laserstrahl (L) durch zumindest zwei optische Keile (5, 6) mit betragsmäßig gleichem Keilwinkel (|αᵢ|) verläuft.

14. Verfahren nach Anspruch 12 oder 13, **dadurch gekennzeichnet, dass** die optischen Keile (5, 6) mit einer Umdrehungsgeschwindigkeit zwischen 100 und 10000 U/min, vorzugsweise zwischen 500 und 7000 U/min gedreht werden.

15. Verfahren nach einem der Ansprüche 12 bis 14, **dadurch gekennzeichnet, dass** die Position und Drehung der zumindest zwei optischen Keile (5, 6) mit Hilfe zumindest eines Istwertgebers (16) erfasst wird.
